# FASCICULE DE BREVET EUROPEEN

(11) **EP 0 494 169 B1**
(45) Date de publication et mention de la délivrance du brevet: **13.11.1996**
(21) Numéro de dépôt: 90913356.3
(22) Date de dépôt: 30.08.1990
(51) Int. Cl.: C08J 3/22, C08K 9/04, C08L 75/04

(54) **Procédé de préparation de composés thermodurcissables chargés du type polyuréthane et suspensions homogènes et stables de la charge**
Verfahren zu Herstellung füllstoffhaltiger wärmehärtbarer Polyurethanzusammensetzungen sowie homgene und stabile Sus- pensionen des Füllstoffs
Process for the preparation of charged thermosetting polyurethane compositions and homogeneous and stable suspensions of the charge

(30) Priorité: 31.08.1989 FR 8911618
(43) Date de publication de la demande: 15.07.1992
(73) Titulaire: JAYMO S.N.C., F-92098 Paris La Défense Cedex 31 (FR)
(72) Inventeur: GUARNERI, Marie, Josée, F-92130 Issy-les-Moulineaux (FR); LERICHE, Christian, F-78810 Feucherolles (FR); PRENEAU, Jean, F-94120 Fontenay-sous-Bois (FR); TROUVE, Patrick, F-92140 Clamart (FR); VERRIER, Pierre, F-92210 S.-Cloud (FR)
(74) Mandataire: Gaucherand, Michel
(86) Numéro de dépôt international: FR9000637
(87) Numéro de publication internationale: WO9103513

(56) Documents cités:
- EP-A- 0 013 142
- EP-A- 0 153 193
- FR-A- 2 372 851
- GB-A- 2 029 421
- Database CHEMICAL ABSTRACTS, Volume 108, No. 12, 1987, Resume No. 187763q, (Columbus, Ohio, US), T.I. CHALYKH et al.: "Sorption and Diffusion of WaterVapor in Filled Polyurethanes and Poly (Vinyl Chloride)"
- Database CHEMICAL ABSTRACTS, (HOTE:STN), Volume 78, No. 12, 1972, Resume No. 73184h; (Columbus, Ohio, US)

## Description

L'invention concerne un procédé de préparation de composés thermodurcissables chargés du type polyuréthane par réaction de condensation de leurs constituants en présence d'une charge pulvérulente.

L'invention concerne également une suspension homogène et stable de la charge dans une phase organique liquide, compatible avec le composé thermodurcissable.

### ARRIERE-PLAN DE L'INVENTION

Depuis longtemps, la littérature spécialisée a décrit de nombreux composés thermodurcissables chargés de matériaux minéraux pulvérulents de dimension préférentiellement pigmentaire ainsi que leurs procédés d'obtention, qui concernent aussi bien des composés thermodurcissables chargés non expansés qu'expansés, se présentant dans ce deuxième cas sous l'aspect de masses plastiques contenant de fines inclusions gazeuses.

L'introduction de charges minérales (brevet français 2 531 971) dans les divers composés thermodurcisables du type polyuréthane poursuit des objectifs divers pour répondre aux demandes des industries spécialisées ou utilisatrices, telles que par exemple celles de l'automobile, du bâtiment, de l'électronique, de l'électroménager ou autres, de disposer de produits non métalliques, de caractéristiques spécifiques telles que légèreté, rigidité, réduction du retrait, diminution du coefficient de dilatation, amélioration de la résistance au choc thermique, amélioration de l'isolation phonique, résistances mécaniques suffisantes à la flexion, traction, compression ou autres caractéristiques physiques importantes.

Diverses charges destinées aux composés thermodurcissables du type polyuréthane sont évoquées dans "European Plastics News" (1979, août, page 21), et "Modern Plastic International" (1982, avril, page 42), telles que le carbonate de calcium, le talc, le mica, le trihydrate d'aluminium, la silice, mais aussi les fibres de verre, les fibres textiles ou autres. C'est ainsi que dans les procédés RIM (Reaction Injection Molding) et RRIM (Reinforced Reaction Injection Molding) sont souvent mises en oeuvre des charges aussi diverses que les fibres de verre, les billes de verre, le mica, la wollastonite, le talc, les fibres minérales traitées afin d'élever la rigidité des pièces produites et d'en abaisser le prix ("Plastic Technologic" 1978, novembre, page 13 et "Elastomerics", 1979, février, page 25).

Pour réaliser l'introduction des charges au sein des composés thermodurcissables, des procédés divers sont proposés, dont la préoccupation essentielle est de produire des composés thermodurcissables chargés ayant au moins certaines des caractéristiques spécifiques antérieurement évoquées.

Dans un premier type de procédé, la charge est introduite dans l'un des constituants du composé polyuréthane, généralement le polyol. Afin de stabiliser la suspension ainsi préparée, c'est-à-dire éviter les effets de sédimentation, le polyol est souvent l'objet d'un greffage (DE OS 2 654 746, 2 714 291 et 2 739 620) d'acide méthacrylique ou d'un autre composé vinylique comme le styrène, ou encore avec l'isocyanate (DE OS 2 834 623). Mais les résultats expérimentaux montrent que la suspension ainsi préparée n'échappe ni à une augmentation importante de sa viscosité la rendant difficilement manipulable, ni à une mauvaise répartition de la charge au sein du composé thermodurcissable réalisé.

Selon un deuxième type de procédé, et pour tenter l'élimination des inconvénients dévoilés dans le premier type, la charge est traitée en surface préalablement à son introduction dans l'un des constituants du composé thermodurcissable souhaité (le polyol), au moyen d'un agent d'enduction compatible avec les constituants, agent d'enduction qui est par exemple un alcool en C₈ à C₁₄ (FR 2 531 971). Mais ce type de procédé produit des inconvénients sensiblement identiques à ceux précités, puisque l'utilisateur constate encore une augmentation de la viscosité de la suspension de la charge dans le polyol, certes atténuée mais encore trop importante, qui est à l'origine d'une dispersion irrégulière de cette charge dans le composé thermodurcissable ultérieurement formé.

Dans un autre type de procédé, qui est orienté sur la production de composés thermodurcissables chargés non expansés (destinés à être moulés par compression), le procédé consiste à préparer (selon le FR 1 512 029 par exemple) un mélange composé de la charge et des additifs nécessaires tels que lubrifiants, catalyseurs de condensation, éventuellement matières colorantes, plastifiants, puis à introduire dans ce mélange placé sous forte agitation la résine thermodurcissable ou ses constituants initiaux suivant des quantités et des proportions bien définies.

Mais les composés thermodurcissables ainsi réalisés manifestent les mêmes inconvénients que ceux déjà évoqués, qui résultent d'une dispersion irrégulière de la charge au sein desdits composés.

Selon un autre type de procédé plus orienté sur la production de composés thermodurcissables expansés chargés, la charge et le plastifiant sont introduits séparément dans le mélange des constituants du composé thermodurcissable souhaité. Un tel type de procédé (décrit par exemple dans le JP 56-155232 ou l'ES 371,150) conduit à des composés thermodurcissables expansés du type polyuréthane, dont les cellules sont irrégulièrement formées et dès lors fragilisées par la mauvaise dispersion de la charge.

Ainsi il apparaît qu'il existe un problème réel et grave dès lors que des charges, en particulier minérales, sont introduites dans des composés thermodurcissables polyuréthanes puisque ces composés chargés présentent des anomalies physiques rédhibitoires.

Dans le cas de composés polyuréthanes chargés non expansés, les anomalies physiques constatées par différences avec ces mêmes composés non chargés sont par exemple, non seulement l'augmentation de la densité, de la rigidité, mais aussi l'affaiblissement des caractéristiques mécaniques telle qu'une résistance amoindrie à la traction, à la flexion et à la compression.

Dans le cas de composés polyuréthanes chargés et expansés, des anomalies physiques constatées dans le premier groupe se manifestent également, avec en outre l'apparition de phénomènes tels que l'augmentation de la densité du composé chargé, de sa dureté hétérogène au toucher, d'irrégularité de souplesse, et de caractéristiques mécaniques rapidement affaiblies par l'application de cycles répétés de déformation (Hystérésis). Tous ces phénomènes sont liés, comme la Demanderesse a pu le constater, à une mauvaise dispersion de la charge au sein du composé thermodurcissable souhaité.

Enfin, s'ajoutent à tous ces maux des phénomènes d'augmentation de la viscosité du milieu recevant la charge ou de sédimentation de ladite charge dans les installations industrielles, phénomènes préjudiciables à leur bon fonctionnement et à la qualité des composés thermodurcissables à commercialiser.

Dès lors, le problème de l'usage des charges dans les composés thermodurcissables du type polyuréthane restant entier, il est compréhensible que leur mise en oeuvre dans ces composés soit très limitée.

Aussi, dans le cadre des polyuréthanes, les objectifs que poursuit l'invention sont d'empêcher l'augmentation de la viscosité du constituant ou du mélange du constituant du composé thermodurcissable souhaité recevant la charge minérale ; d'éviter les phénomènes de sédimentation de la charge dans les installations industrielles, propres à la production du composé thermodurcissable souhaité ; de permettre l'introduction de la charge dans l'un des constituants ou simultanément avec tous les constituants ou encore dans le mélange des constituants du composé thermodurcissable souhaité ; enfin, de provoquer une excellente répartition de la charge minérale au sein du composé thermodurcissable souhaité pour lui procurer une amélioration sensible de ses propriétés physiques et mécaniques et des facilités de mise en oeuvre tout en augmentant la quantité de charge introduite.

### SOMMAIRE DE L'INVENTION

Forte des inconvénients précités, la Demanderesse a poursuivi, à travers ses recherches, l'établissement d'un procédé de préparation de composés thermodurcissables chargés de type polyuréthane répondant aux objectifs qu'elle s'est imposée.

La procédé selon l'invention de préparation de composés thermodurcissables chargés du type polyuréthane par réaction de condensation des constituants du composé souhaité en présence d'une charge pulvérulente, se caractérise en ce que :
a) on prépare une suspension homogène et stable de ladite charge dans une phase organique liquide, compatible avec le composé thermodurcissable souhaité, choisie dans le groupe constitué par :
   - les dialcoyles phtalates symétriques ou asymétriques, aliphatiques, aromatiques, cycliques, ramifiés ou non, ou dérivés de glycols ;
   - les esters de poly- ou mono acides organiques ou inorganiques du type adipate d'alcoyle, sébaçate d'alcoyle, les diesters d'alcools en C₁ à C₈ de mono-, di- ou triéthylèneglycol et de glycérol du type trimellitate, azélate, abiétate, citrate, mellitate, séarate, oléate, palmitate, ricinoléate, myristate, benzoate, pélargonate ;
   - les phosphates mono- ou polyalcoyles, d'aryle et de dérivés des glycols;
   - les phosphates d'alkyl-aryle ;
   - les polyesters ;
   - les halophosphates condensés ;
   - et leurs mélanges,
   en prédispersant la charge avec l'assistance d'un agent stabilisant introduit dans ladite phase organique liquide, ledit agent stabilisant répondant à la formule : 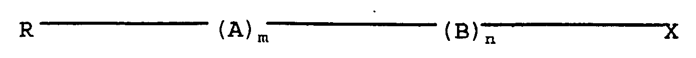 comprenant au moins une fonction acide libre, dans laquelle X est un radical carboxylique, phosphinique, phosphonique, phosphorique, sulfonique ou sulfurique, (A) est l'oxyde d'éthylène, (B) est l'oxyde de propylène, avec 0 ≤ (m + n) ≤ 24, R est choisi dans le groupe formé par les radicaux alkyles, les aryles, les alkyl-aryles, les hétérocycles saturés ou non, contenant 5 à 28 atomes de carbone et le radical stéroïde ;
b) on introduit la suspension homogène et stable de ladite charge préparée précédemment dans le milieu réactionnel avant, pendant ou après l'introduction de l'un au moins des constituants du composé thermodurcissable souhaité.

### DESCRIPTION DETAILLEE DE L'INVENTION

Alors que l'art antérieur préconise des procédés de préparation de composés thermodurcissables chargés qui comportent l'introduction de la charge dans le milieu réactionnel sans préparation préalable, ou bien après un traitement de surface, procédés conduisant à l'obtention de composés thermodurcissables chargés dont les caractéristiques mécaniques et physiques sont toujours amoindries, le procédé selon l'invention s'en distingue par le fait que la charge introduite dans le milieu réactionnel l'est sous la forme d'une suspension homogène et stable de ladite charge dans une phase organique liquide compatible avec le composé thermodurcissable souhaité, c'est-à-dire compatible avec l'un au moins des constituants du composé thermodurcissable souhaité et durant la réaction de formation dudit composé thermodurcissable.

Selon l'invention, la phase organique liquide compatible avec le composé thermodurcissable souhaité est choisie parmi les plastifiants des composés thermodurcissables du type polyuréthane, choisie dans le groupe constitué par les dialcoyles phtalates symétriques ou asymétriques, aliphatiques, aromatiques, cycliques, ramifiés ou non, ou dérivés de glycols, utilisés seuls ou en mélange, tels que par exemple le dioctylphtalate, le dibutylphtalate, le dinonylphtalate, le didécylphtalate, le diheptylphtalate, le diisodécylphtalate, le diisoundéciléniquephtalate, les phtalates mixtes d'octyle, de butyle et de décyle, le cyclohexylphtalate, le métoxyéthylphtalate, le métoxybutylphtalate, le benzylphtalate, le butoxyéthylphtalate et autres substituants à base de glycols, les esters poly ou mono acides organiques ou inorganiques du type adipate d'alcoyle, sébaçate d'alcoyle, les diesters d'alcools en C₁ à C₈ de mono, di ou triéthylèneglycol et de glycérol du type trimellitate, azélate, abiétate, citrate, mellitate, stéarate, oléate, palmitate, ricinoléate, myristate, benzoate, pélargonate, les phosphates mono ou polyalcoyles, d'aryle et de dérivés des glycols tels que par exemple le trioctylphosphate, le tricrézylphosphate, l'octyldicrézylphosphate, ou autres, les phosphates d'alkylaryle, les polyesters tels que par exemple les polyadipates d'éthylène glycol ou de propylène glycol, les polysébaçates d'éthylène glycol ou de propylène glycol et les halophosphates condensés.

La charge pulvérulente à prédisperser au sein de la phase organique liquide précitée et intervenant dans le procédé selon l'invention de préparation de composés thermodurcissables chargés du type polyuréthane, est formée de matières pulvérulentes d'origine minérale ou synthétique.

Les matières minérales pulvérulentes entrant dans la charge sont par exemple choisies parmi les sels et/ou oxydes minéraux tels que le carbonate de calcium, le carbonate de magnésium, le carbonate de zinc, la dolomie, la chaux, la magnésie, le trihydroxyde d'aluminium, la silice, les argiles et autres silico-alumineux tels que le kaolin, le talc, le mica, les oxydes métalliques tels que par exemple l'oxyde de zinc, le trioxyde d'antimoine, les oxydes de fer, l'oxyde de titane, la wollastonite, les fibres et billes de verre, les pigments divers, le phospore rouge.

La charge peut également être formée de matières pulvérulentes organique d'origine naturelle ou synthétique telles que par exemple des colorants, le noir de carbone, de l'amidon, des fibres et farine de cellulose, les fibres de carbone et des agents divers connus pour leurs actions spécifiques, tels que les poudres de mélamines par exemple.

Toutes ces matières pulvérulentes peuvent être mises en oeuvre dans la charge seules ou en combinaison selon le composé thermodurcissable souhaité.

Les matières pulvérulentes utilisées dans l'invention ont une dimension comprise entre 0,01 et 300µm et plus préférentiellement entre 0,1 et 100µm.

L'agent stabilisant mis en oeuvre pour la préparation de la suspension homogène et stable de la charge dans la phase organique liquide compatible avec le composé thermodurcissable souhaité répond à la formule générale comprenant au moins une fonction acide libre : 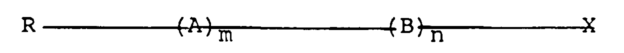 dans laquelle (A) représente l'oxyde d'éthylène, (B) représente l'oxyde de propylène, avec 0 ≤ (m + n) ≤ 24, R est un radical alkyl, un radical aryl, un radical alkyl-aryl, un hétérocycle saturé ou non contenant de 5 à 28 atomes de carbone et de préférence de 8 à 24 atomes de carbone, ou encore un radical stéroïde, ledit radical R pouvant être ramifié ou non et/ou comporter un ou plusieurs groupements fonctionnels du type halogène -OH, -COOH, -COOR, -NO₂, -NH₂, -CONH₂, CN, phosphinique, phosphonique, phosphorique, sulfonique, sulfurique, alors que X peut être l'un des radicaux carboxylique, phosphinique, phosphonique, phosphorique, sulfonique, sulfurique.

Dans le cas où X comporte plusieurs fonctions acides, l'une d'entre elles au moins doit rester libre, les autres pouvant être salifiées ou estérifiées au moyen d'un alcool de formule R'-OH dans laquelle le radical R' peut être une chaîne carbonée contenant 1 à 4 atomes de carbone ou l'un des radicaux appartenant au groupe précédemment défini pour R. Il est également possible que le radical R' soit identique au radical R.

A titre d'exemple, on peut citer pour le radical R les radicaux aussi divers que les normaux ou iso hexyl, octyl, decyl, dodecyl, dodecyldioxyéthylène, tetradécyl, hexadécyl, hexadécyltrioxyéthylène, octadécyl, octadécyloxy-éthylène, octylpentaoxyéthylène, heptadécyl, phényl, méthyl-2 butyl-2, méthyl-2 butyl-1, phényl-3- propényl-1, phényl-1 propényl, paranonylphényl dioxyéthylène, paraméthylphényl, cyclohexyl, le radical du cholestérol, le β-naphtyl, les radicaux des diols.

Divers adjuvants de type connu et couramment utilisés dans la production des thermodurcissables du type polyuréthane peuvent également être introduits, soit dans la suspension stable et homogène de la charge, soit dans les constituants du composé thermodurcissable souhaité, soit encore simultanément pour partie dans la suspension de la charge et pour partie dans les constituants du composé thermodurcissable souhaité.

Ces divers adjuvants sont par exemple les stabilisants thermique ou photochimique, les lubrifiants, des plastifiants autres que ceux mis en oeuvre dans la préparation de la suspension de la charge, les antistatiques, les ignifugeants, les agents passivants des métaux tels que les agents cupropassifs, les agents porofores, les catalyseurs, de réaction, les tensioactifs, ou autres encore.

Il est également possible, dès lors que la charge pulvérulente est dispersée au sein de la phase organique liquide compatible avec le composé thermodurcissable souhaité selon l'invention, d'y ajouter au moins une fraction de l'un au moins des polyols pouvant intervenir dans la réalisation dudit composé thermodurcissable.

En pratique, la préparation selon l'invention de la suspension stable et homogène de la charge pulvérulente dans la phase organique liquide se fait par l'usage de procédés et moyens connus de l'homme de l'art.

Elle peut s'effectuer par exemple à température ambiante dans un mélangeur muni de moyens d'agitation par l'introduction successive de la phase organique liquide, de l'agent stabilisant et de la charge.

Selon l'invention, la suspension stable et homogène de la charge pulvérulente dans la phase organique liquide se compose principalement par rapport à la masse totale :
a/ de 20% à 80% en poids, et préférentiellement de 40% à 70% en poids de la charge,
b/ de 79,9% à 18,4% en poids, et préférentiellement de 59,5% à 28,9% en poids de la phase organique liquide,
c/ de 0,1% à 1,6% en poids, et préférentiellement de 0,5% à 1,1% en poids de l'agent stabilisant.

La viscosité de la suspension stable et homogène de la charge pulvérulente est souhaitablement comprise entre 500 et 2 000 mPa.s, et préférentiellement comprise entre 600 et 1600 mPa.s, afin d'être compatible avec celle des polyols utilisés dans la composition du composé thermodurcissable du type polyuréthane souhaité. Cette viscosité est mesurée à la température ambiante au moyen d'un appareil Brookfield muni d'un axe n° 3 ou 4 selon la viscosité à mesurer, celle-ci l'étant à une vitesse de 100 tours par minute.

Selon l'invention, dès lors que la suspension homogène et stable de la charge dans la phase organique liquide est réalisée, cette suspension est introduite dans la composition initiale du composé thermodurcissable souhaité du type polyuréthane, comprenant au moins un polyol ou un constituant organique ayant un hydrogène mobile, au moins un polyisocyanate, éventuellement un agent d'expansion, un catalyseur et éventuellement d'autres agents.

La suspension stable et homogène de la charge est introduite dans la composition initiale du composé thermodurcissable du type polyuréthane souhaité à raison de 1% à 100% en poids et préférentiellement de 10% à 50% en poids par rapport au polyol mis en oeuvre.

Alors qu'il est connu que l'introduction d'une charge (en quantité donnée) dans un polyol provoque une augmentation très importante de la viscosité du polyol chargé par comparaison à celle du polyol seul, l'introduction d'une même quantité de ladite charge dans le polyol sous la forme de la suspension stable et homogène selon l'invention, permet de maintenir la viscosité du polyol ainsi chargé proche de la viscosité initiale dudit polyol seul, voire de la diminuer.

Les polyols mis en oeuvre selon l'invention sont des constituants bien connus qui appartiennent aux familles des polyéthers et des polyesters.

Parmi les polyéthers polyols courants peuvent être cités par exemple, les produits d'addition d'oxyde de propylène sur un polyol simple tel que par exemple, le glycol, le glycérol, le triméthylolpropane, le sorbitol, en présence ou non d'oxyde d'éthylène. Mais peuvent être également cités des polyéthers polyols spéciaux tels que par exemple des polyéthers à base aminée, obtenus par addition d'oxyde de propylène ou éventuellement d'oxyde d'éthylène sur des amines, des polyéthers halogénés, des polyéters greffés résultant de la copolymérisation de styrène et d'acrylonitrile en suspension dans un polyéther, ou encore le polytétraméthyléneglycol.

Parmi les polyesters polyols peuvent être mentionnés par exemple ceux résultant de la polycondensation de polyalcools sur les polyacides ou leurs anhydrides tels que les diacides, tels que par exemple adipique, phtalique ou autres réagissant avec des diols (par exemple éthylène glycol, propylène glycol, butylène glycol ou autres); des triols (par exemple, glycérol, triméthylolpropane ou autres), et des tétrols (par exemple, le pentaérythritol ou autres, seuls ou en mélange).

Mais parmi les polyols peuvent être également évoqués des composés divers hydroxylés tels que par exemple les polybutadiènes hydroxylés, les prépolymères à terminaisons hydroxyles (résultant de la réaction d'un excès de polyol sur un diisocyanate), ou encore les polyols simples tels que par exemple glycérol, aminoalcools mis en oeuvre en petite quantité avec les polyéthers polyols ou les polyesters polyols pour augmenter la réticulation.

Les polyisocyanates mis en oeuvre selon l'invention sont également des composés bien connus de type aromatique tels que par exemple, le toluènediisocyanate (T.D.I), le diphénylméthane diisocyanate 4-4' et ses homologues (M.D.I), le naphtalène diisocyanate 1-5 (N.D.I), ou de type linéaire tels que par exemple l'hexaméthylène diisocyanate (H.D.I.), l'isophorone diisocyanate (I.P.D.I.), ou se présentant encore sous l'aspect de prépolymères obtenus par la combinaison des isocyanates entre eux avec des composés réactifs.

Des agents d'expansion du composé thermodurcissable du type polyuréthane peuvent aussi être mis en oeuvre. Ils sont choisis parmis ceux bien connus, tels que par exemple l'eau qui réagit avec les radicaux -NCO en dégageant du dioxyde de carbone, ou encore des liquides et gaz fluorés tels que le trichlorofluorométhane, le dichlorofluorométhane ou autres fluoroalcanes, ainsi que divers hydrocarbures, en particulier halogénés tels que par exemple le dichlorométhane.

Pour que la réaction de formation du composé thermodurcissable souhaité soit équilibrée, il est souhaitable d'introduire au sein du milieu réactionnel un système catalytique approprié, formé d'au moins un composant catalytique. Parmi les composants catalytiques mis en oeuvre, peuvent être mentionnés par exemple, les amines tertiaires, la triéthylamine, la N-méthylmorpholine, les benzylamines substituées, la diaza 2-2-2 bicyclooctane, ou bien les composés de l'étain tels que par exemple le dilaurate de dibutylétain, l'octanoate staneux, ou encore des sels organiques de sodium, de potassium, de calcium par exemple.

Enfin, divers autres adjuvants de type connu peuvent être également introduits dans la composition du composé thermodurcissable chargé souhaité. Ces divers adjuvants possibles appartiennent aux groupes des agents tensio-actifs, (par exemple des copolymères blocs siloxanes - oxydes d'alkylène, des sulfonates, des tensio-actifs non ioniques), des agents ignifugeants intervenant sur la structure des chaînes macromoléculaires (par incorporation par exemple d'atomes d'azote, de phosphore, de chlore ou de brome dans ladite structure), des pigments et colorants et des agents de démoulage, des agents de réticulation tels que les polyamines, l'éthylène diamine ou autres.

Le composé thermodurcissable chargé du type polyuréthane est obtenu, généralement à température ambiante, par le mélange de la suspension homogène et stable de la charge :
- soit, en formant d'abord un prémélange de ladite suspension avec le polyol, ce prémélange étant ensuite mélangé avec les autres constituants,
- soit simultanément, avec les divers constituants du composé thermodurcissable souhaité,
- soit enfin, après que soit réalisé le prémélange des constituants,
tous les constituants mis en oeuvre étant introduits selon des quantités et des proportions définies à la demande.

Il peut être souhaitable de modifier les proportions relatives des divers constituants de la formulation dans le but d'accroître la densité du réseau macromoléculaire et par là-même certaines propriétés mécaniques (par exemple la résistance à la compression). Plus particulièrememt, il peut être souhaitable d'augmenter l'"index d'isocyanate" (qui est le rapport en pour cent du taux d'isocyanate mis en oeuvre dans la formulation au taux théorique requis) comme l'homme de l'art le pratique habituellement.

Les composés thermodurcissables du type polyuréthane chargés selon le procédé de l'invention peuvent être réalisés par les moyens connus, par exemple par injection, par coulée ou par projection, les divers composants intervenant dans la réaction étant dosés par exemple par des pompes à titre (à engrenage ou à piston) et mélangés dans une tête de mélange pour former la composition mise en oeuvre par les moyens précités.

De cette manière, on peut produire des composés thermodurcissables chargés du type polyuréthane non expansé, polyuréthane élastomère, ou encore polyuréthane expansé rigide, semi-regide ou souple sans provoquer, au moment de l'introduction de la charge, une augmentation de la viscosité du milieu réactionnel formé par les divers constituants et agents mis en oeuvre, ni l'apparition dans les installations industrielles de phénomènes de sédimentation de la charge.

Plus que cela et grâce à l'invention, il est possible de pratiquer l'introduction de la charge dans l'un des constituants, ou simultanément avec tous les constituants, ou encore dans le mélange des constituants du composé thermodurcissable souhaité, tout en obtenant une excellente répartition de la charge minérale en son sein et une amélioration sensible de ses propriétés mécaniques et physiques, des facilités de mise en oeuvre tout en augmentant la quantité de charge introduite.

Le procédé selon l'invention peut être mis en oeuvre sur les technologies connues destinées à la fabrication des composés thermodurcissables du type polyuréthane, par exemple en expansion libre, en moulage en moule froid ou chaud, ouvert ou fermé, ou autres encore.

L'invention sera mieux comprise grâce à la description illustrative des exemples de préparation de suspensions de la charge dans la phase liquide organique et la dispersion de la charge au sein des composés thermodurcissables du type polyuréthane.

### Exemple 1

Cet exemple illustre la préparation de la suspension homogène et stable de la charge minérale de dimension pigmentaire dans une phase organique liquide avec l'assistance d'un agent stabilisant.

Pour ce faire, on a introduit dans une enceinte de préparation munie d'une agitation (disperseur rapide de type connu), la phase organique liquide non miscible à l'eau qui est du diisoundécyléniquephtalate (D.I.U.P.) à raison de 39,1% en poids par rapport à la masse de la suspension à préparer.

Puis, on a dissous dans la phase organique liquide l'agent stabilisant qui est un alkyl oxyéthylé phosphaté de formule C₁₀H₂₁-(CH₂-CH₂-O)₅-PO₃H₂ (représentant 1,5% en poids par rapport à la charge minérale) à raison de 0,9 % en poids par rapport à la masse de la suspension à préparer.

Enfin, on a introduit dans la solution ainsi préparée la charge minérale pulvérulente de dimension pigmentaire consituée par du carbonate de calcium pulvérulent naturel ayant une surface spécifique de 5,5m².g⁻¹, un diamètre moyen de 1 µm et une coupe de 6 µm, à raison de 60% en poids par rapport à la masse de la suspension à préparer.

Au terme de sa préparation, la suspension avait une viscosité de 850 mPa.s. Après une période de stockage de huit jours, on a pu constater que la suspension préparée était homogène et stable puisque la viscosité mesurée en fin de préparation était la même et que nul phénomène de sédimentation n'était perceptible.

Par comparaison, l'introduction de 60% en poids de la même charge minérale pulvérulente (CaCO₃ de surface spécifique 5,5 m².g⁻¹, de diamètre moyen 1 µm, et de coupe 6 µm) dans 40% en poids de la même phase organique liquide (DIUP) en l'absence de l'agent stabilisant conduit à la formation d'un milieu pâteux dont la viscosité n'est plus mesurable par le viscosimètre Brookfield.

### EXEMPLE 2

Cet exemple illustre la préparation de la suspension homogène et stable de la charge minérale selon l'invention constituée par des trihydroxydes d'aluminium (commercialisé par MARTINSWERKE sous la dénomination OL 104, de surface spécifique 3 m²/g et de diamètre moyen 2 µm dans la phase organique liquide en présence du même agent stabilisant que dans l'exemple 1.

La préparation a été réalisée selon le même processus que dans l'exemple 1 et selon les proportions en % en poids suivantes :
- trihydroxyde d'aluminium 50%
- Diisoundécylénique phtalate 49,5% (D.I.U.P.)
- agent stabilisant :
   C₁₀H₂₁-(CH₂-CH₂-0)₅-PO₃H₂ 0,5%

La viscosité de cette suspension mesurée au terme de sa préparation était de 1 240 mPa.s (mesurée sur un viscomètre Brookfield -axe RTV n°4, à 100 tours par minute à 23°C). Aucun phénomène de sédimentation n'était perceptible après un stockage de 8 jours.

### EXEMPLE 3

Cet exemple illustre la préparation de la suspension homogène et stable d'une charge organique selon l'invention, constituée par une mélamine pulvérulente (commercialisée par la société CHEMIE LINZ) dans une phase organique liquide en présence du même agent stabilisant que dans l'exemple 1.

La préparation a été réalisée selon le même processus que dans l'exemple 1 et selon les proportions en % et en poids suivantes :
- Mélamine 70,0%
- Plastifiant phosphaté commercialisé par MONSANTO sous l'appellation SANTICISER 148 28,9%
- agent stabilisant
   C₁₀H₂₁-(CH₂-CH₂-O)₅-PO₃H₂ 1,1%

La viscosité de cette suspension mesurée dans les mêmes conditions que dans l'exemple 2 était de 6000 mPa.s. Aucun phénomène de sédimentation n'était perceptible après un stockage de huit jours.

### EXEMPLE 4

Cet exemple illustre l'effet constaté de la modification mineure des caractéristiques viscosimétriques d'un polyol chargé au moyen de la suspension stable et homogène selon l'invention par comparaison avec les caractéristiques viscosimétriques du même polyol seul et chargé par l'introduction directe de la même charge sous forme pulvérulente, comme l'indique l'art antérieur.

D'une manière similaire au procédé de préparation décrit dans l'exemple 1, on a préparé :
- Pour une première série d'essais (Essai 1), une suspension homogène et stable d'un carbonate de calcium pulvérulent commercialisé sous la marque MILLICARB par la société OMYA par dispersion de 50% en poids de ladite charge dans 49,5% en poids de dioctylphtalate (phase organique liquide) à l'aide de 0,5% en poids d'un agent stabilisant de formule :

   C₈H₁₇-(CH₂-CH₂-O)₅-PO₃H₂
- Pour une deuxième série d'essais (Essai 2), une suspension homogène et stable d'un carbonate de calcium commercialisé sous la marque "l'Etiquette violette" par la société OMYA, par dispersion de 49,5% en poids de ladite charge dans 50% en poids de diisoundécylénique phtalate (phase organique liquide) à l'aide de 1,5% en poids d'un agent stabilisant de formule :

   C₁₀H₂₁-(CH₂-CH₂-0)₅-PO₃H₂

   Par la suite, on a préparé pour les deux séries d'essais :
- le polyol chargé par 25 parties de la charge pulvérulente selon l'art antérieur dans 100 parties dudit polyol.
- le polyol chargé par 50 parties de la suspension homogène et stable selon l'invention dans 100 parties dudit polyol.

On a dès lors mesuré les viscosités Brookfield à 23°C (RVT axe 2) en mPa.s à 50 tours par minute :
- du polyol seul,
- des suspensions homogènes et stables des charges selon l'invention,
- du polyol chargé par les charges minérales pulvérulentes (selon l'art antérieur),
- du polyol chargé par les suspensions homogènes et stables selon l'invention.

On a également vérifié les caractéristiques de sédimentation et de non-sédimentation de l'un et l'autre des polyols chargés précités.

Les résultats correspondants ont été regroupés dans le Tableau 1 ci-après :

**Tableau 1**

| Introduction de 25 parties de charge dans 100 parties de polyol. Viscosité en mPa.s. | | |
|---|---|---|
| | Essai 1 | Essai 2 |
| Polyol seul polyurax polyol U - PPG 2025 de BP | 430 | 430 |
| Suspension homogène et stable de la charge selon l'invention | 300 | 660 |
| Polyol avec charge pulvérulente selon l'art antérieur | Millicarb 650 Sédimentation complète après 1 heure | Etiquette violette 1100 Sédimentation complète après 1 heure trente |
| Polyol avec charge selon l'invention | 400 | 580 |
| | aucune sédimentation après 2 jours | |

### EXEMPLE 5

Cet exemple illustre le procédé selon l'invention de préparation de composés thermodurcissables chargés du type polyuréthane par réaction de condensation des constituants du composé souhaité en présence d'une charge pulvérulente introduite sous la forme de la suspension homogène et stable de l'exemple 1.

Pour ce faire, on a réalisé dans une installation industrielle la fabrication en continu de blocs à découper en mousse de polyuréthane chargé, par coulée sur tapis transporteur.

Une tête de coulée animée d'un mouvement de va-et-vient transversal déposait la composition liquide (mélange des constituants et de la charge) sur un papier kraft à bords relevés supportée par une première bande transporteuse inclinée. Après que l'expansion se soit amorcée, la composition polyuréthane en cours d'expansion était reprise par une deuxième bande transporteuse horizontale, l'expansion en toit (dans le sens de la hauteur) étant règlée grâce à la présence d'un papier kraft maintenu par un train de rouleaux.

Les constituants entrant dans la composition pour former le composé polyuréthane expansé étaient introduits dans la tête de coulée par des pompes doseuses, le mélange s'effectuant par agitation mécanique.

Les compositions mises en oeuvre dans la fabrication du composé polyuréthane expansé contenaient qualitativement les constituants suivants :
- un polyol polyéther de poids moléculaire 3500 disposant d'un indice d'hydroxyles égales à 48 (exprimé en milligramme de KOH par gramme),
- un plastifiant et la charge se présentant sous la forme de la suspension provenant de l'exemple 1,
- un polyisocyanate qui est le toluène diisocyanate (TDI 80-20 comprenant 80% d'isomère 2-4 et 20% d'isomère 2-6),
- de l'eau comme agent d'expansion,
- des catalyseurs de réaction bien connus, tels que la diaza (2,2,2) bicyclooctane (DABCO), le diméthyléthylamine (DMEA), ou encore l'octanoate staneux,
- des silicones bien connus comme agents tensioactifs,
- des colorants et agents divers habituellement mis en oeuvre par l'homme de l'art.

Les quantités exprimées en parties en poids, des divers constituants sont rassemblés dans le :
- Tableau 2, quand les compositions ont été utilisées sur machine règlée en largeur à 200 centimètres (essais 3 à 6),
- Tableau 3, quand les compositions ont été utilisées sur la même machine réglée en largeur à 100 centimètres (essais 7 à 10).

De même, toutes les caractéristiques mécaniques et physiques des mousses polyuréthanes ainsi produites ont été rassemblées dans les tableaux 4 et 5.

Ces caractéristiques ont été déterminées au moyen de méthodes normalisées dont la liste est donnée ci-après :
- densité, selon la norme NF T56107
- dureté par indentation, selon la norme ISO 2439 méthode B
- rémanence à la compression, selon la norme ISO 1856 méthode A
- Essais à la fatique dynamique : hauteur et dureté selon les normes NF T56114 et NF T56115
- résistance à la compression, selon la norme DIN 53577
- vieillissememt humide, selon la norme NF T56117
- résistance à la traction, selon la norme ISO 1798
- allongement à la rupture, selon la norme ISO 1798
- résistance au passage de l'air, selon la norme NF T56127.

L'examen des tableaux 4 et 5 révèle que toutes les caractéristiques physiques et mécaniques des polyuréthanes expansés chargés réalisés selon le procédé de l'invention sont très proches, voire équivalents à celles des mêmes polyuréthanes expansés non chargés. Dès lors, il apparaît que l'excellente dispersion de la charge au sein des mousses polyuréthanes permet la réalisation de composés thermodurcissables sans dégradation de leurs caractéristiques mécaniques et physiques, et ce grâce au procédé de l'invention.

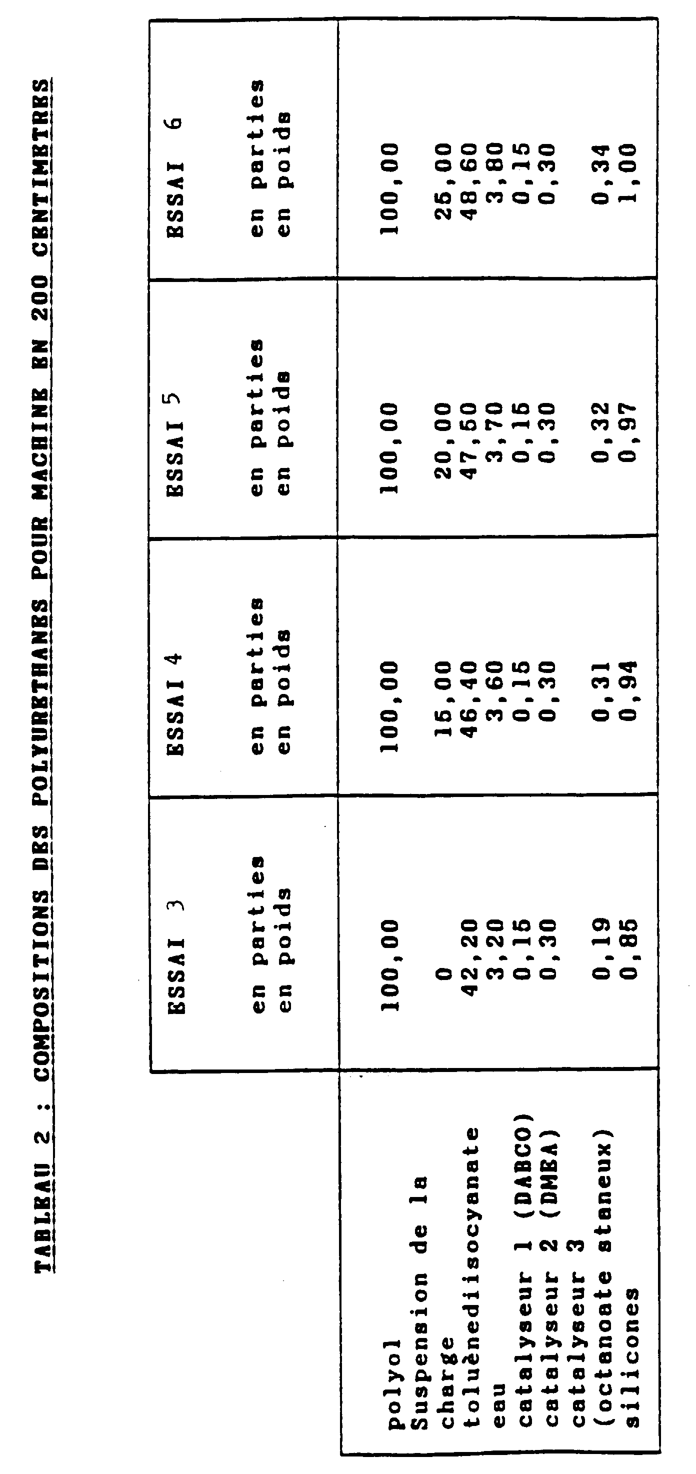

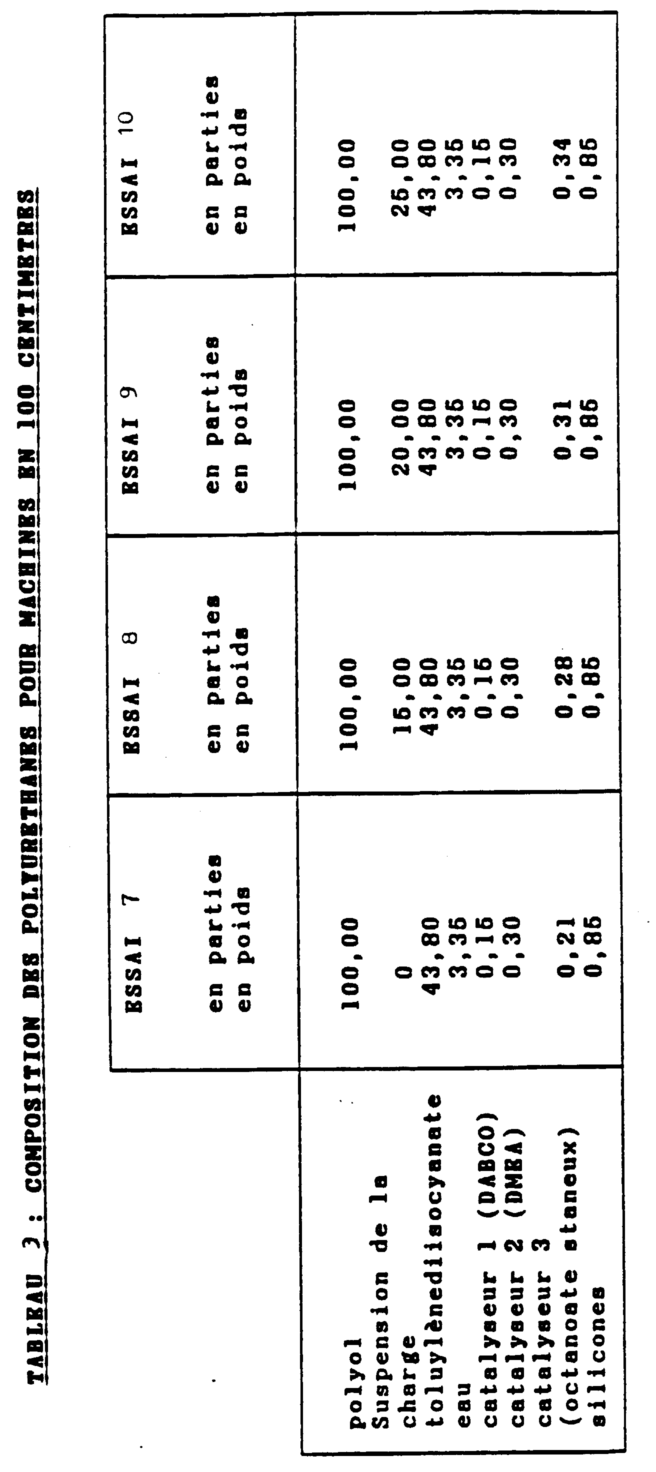

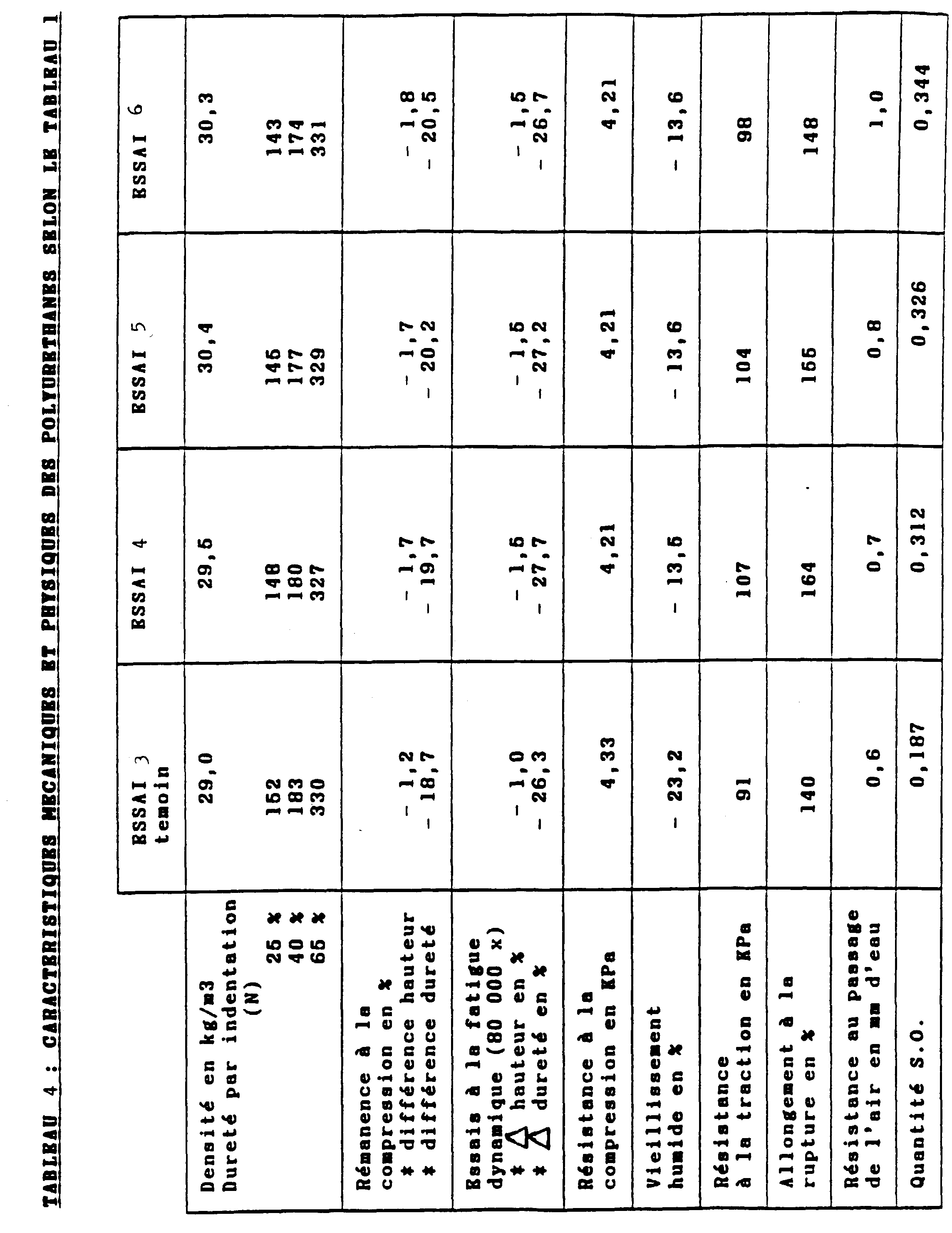

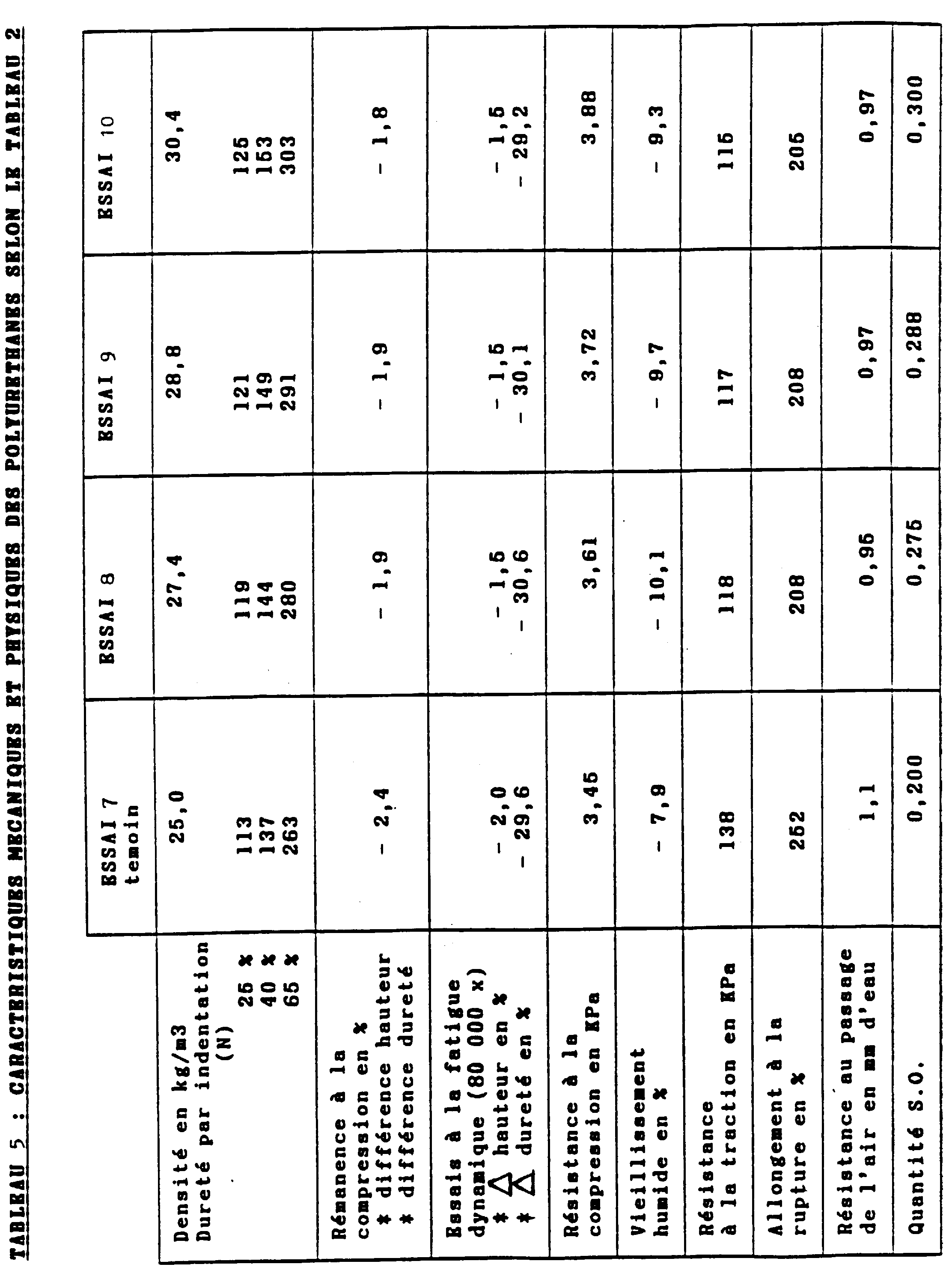

### EXEMPLE 6

Cet exemple est une illustration comparative entre les caractéristiques mécaniques et physiques de polyuréthanes expansés :
- Essai 11 (témoin) sans charge.
- Essai 12, chargé au moyen de la suspension homogène et stable de la charge dans la phase organique liquide selon l'invention.
- Essai 13, chargé par introduction directe de la charge pulvérulente et de la phase organique liquide.
- Ces essais ont été réalisés sur une machine pilote SECMER permettant de fabriquer de manière discontinue des blocs de dimensions 0,8 x 0,8 x 1,0 mètre et d'évaluer les caractéristiques mécaniques qui pourraient être acquises dans un processus à échelle industrielle.

La suspension homogène et stable selon l'invention était formée de 60% en poids de CaCO₃ pulvérulent (fabriqué par la société OMYA sous la dénomination OMYALITE 60), dispersé dans 39% en poids de diisoundécylénique phtalate, en présence de 1% en poids d'un agent stabilisant :

C₁₀H₂₁-(CH₂-CH₂-O)₅-PO₃H₂

Les compositions mise en oeuvre dans la fabrication des polyuréthanes expansés contenant qualitativement les produits suivants :
- diisocyanate : de marque CARADETE 80 de SHELL
- Polyol : de marque VORANOL CP 8322 de DOW CHEMICALS
- octanoate d'étain de marque KOSMOS 29 de GOLDSCHMIDT
- DABCO 33 de marque NIAX CATALYST A 33 de UNION CARBIDE
- NIAX Al de UNION CARBIDE
- diméthyléthanolamine (DMEA) de marque AMIETOL M 21 de I.C.I.
- silicone : Thégostab BF 2370 de GOLDSCHMIDT.

Les quantités exprimées en parties en poids des divers constituants sont rassemblés dans le Tableau 6.

De même, toutes les caractéristiques mécaniques et physiques des mousses polyuréthanes ainsi produites, ont été rassemblées dans le tableau 7. Ces caractéristiques ont été déterminées au moyen des méthodes normalisées dont la liste est donnée dans l'Exemple 5.

L'analyse de ces caractéristiques met en évidence que :
- le facteur d'indentation exprimant la notion de confort présente des valeurs équivalentes dans les essais 12 et 13 supérieures à l'essai témoin 11.
- la résistance à la traction selon l'essai 13 est très inférieure à celles du témoin (essai 11) et de l'invention (Essai 12) qui sont identiques, alors que l'allongement à la rupture selon l'invention (essai 12) est supérieur à l'essai 13 et à l'essai 11 (témoin).
- la rémanence à la compression en % dans le cas de l'invention apparaît meilleur.
- la densité des mousses polyuréthanes des essais 12 et 13 avoisine les 40 kg/m³ alors que la densité du témoin est inférieure. Cette plus forte densité des essais 12 et 13 peut être ramenée à la valeur du témoin par des procédés connus, telle qu'une légère augmentation de la quantité d'eau assujétie à la quantité correspondante d'isocyanate.

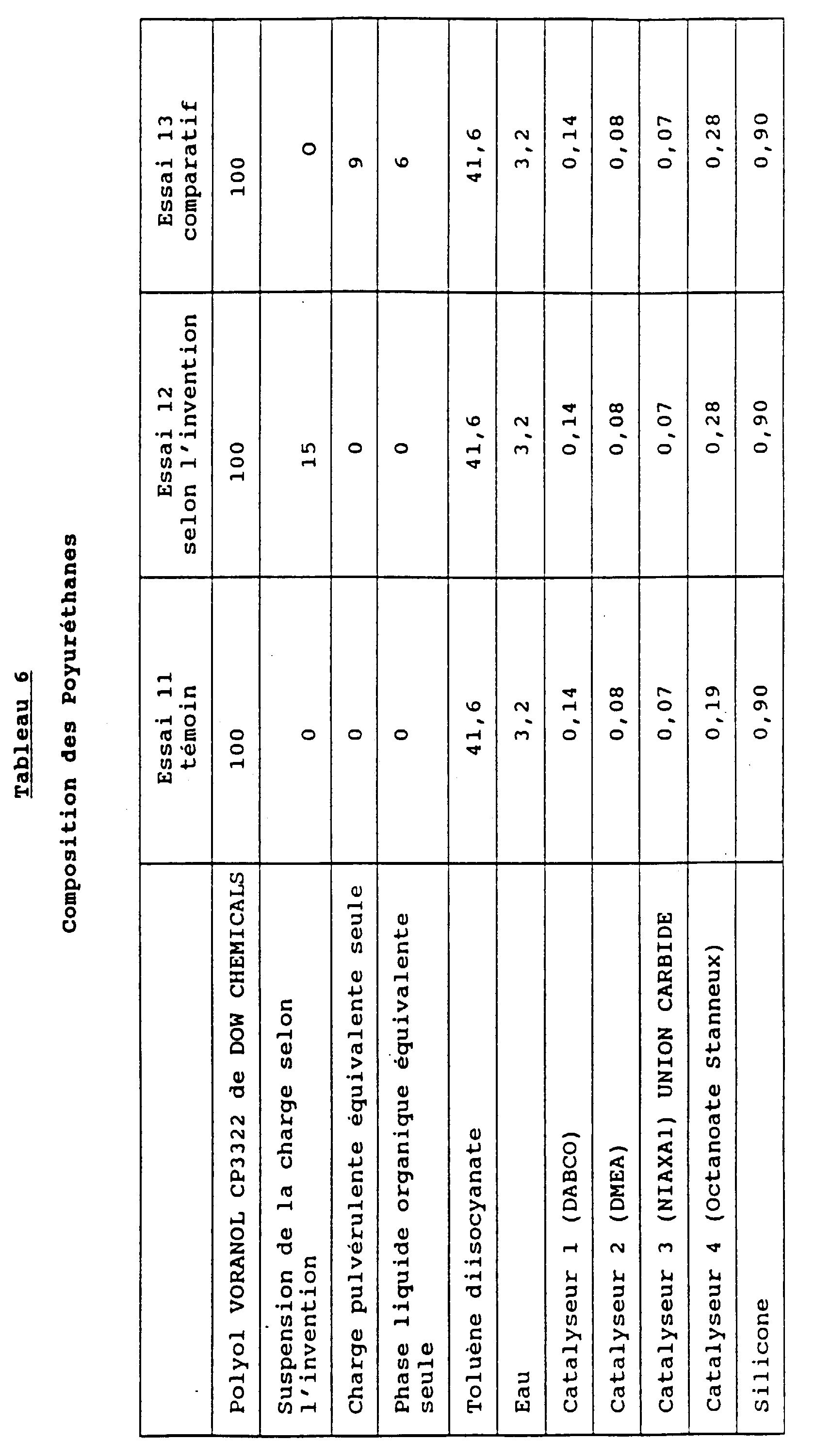

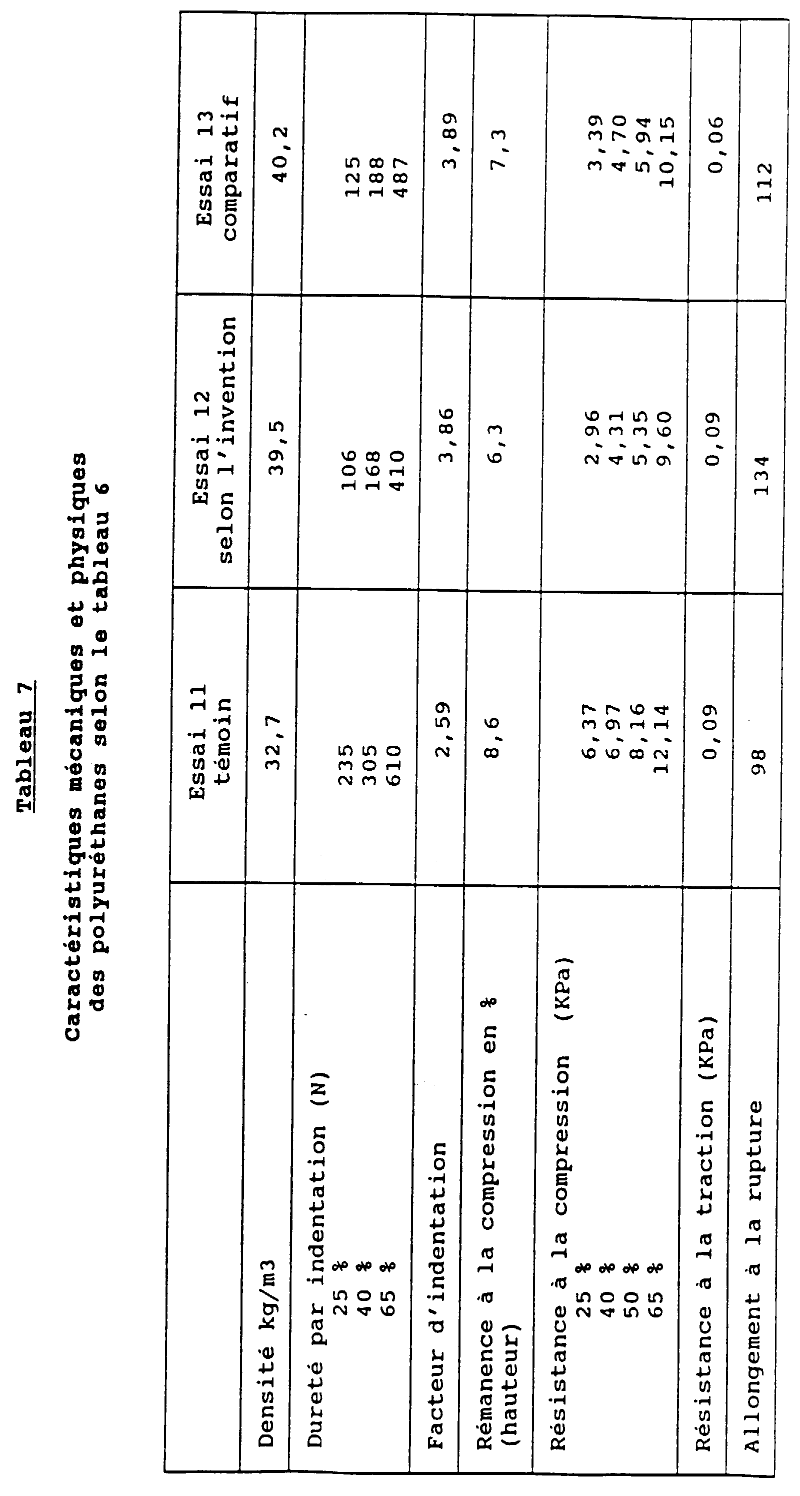

## Revendications

1. Procédé de préparation de composés thermodurcissables chargés du type polyuréthane par réaction de condensation des constituants du composé souhaité en présence d'une charge pulvérulente, caractérisé en ce que :
a) on prépare une suspension homogène et stable de ladite charge dans une phase organique liquide, compatible avec le composé thermodurcissable souhaité, choisie dans le groupe constitué par ;
- les dialcoyles phtalates symétriques ou asymétriques, aliphatiques, aromatiques, cycliques, ramifiés ou non, ou dérivés de glycols;
- les esters de poly- ou mono acides organiques ou inorganiques du type adipate d'alcoyle, sébaçate d'alcoyle, les diesters d'alcools en C₁ à C₈ de mono-, di- ou triéthylèneglycol et de glycérol du type trimellitate, azélate, abiétate, citrate, mellitate, stéarate, oléate, palmitate, ricinoléate, myristate, benzoate, pélargonate ;
- les phosphates mono- ou polyalcoyles, d'aryle et de dérivés des glycols;
- les phosphates d'alkyl-aryle ;
- les polyesters ;
- les halophosphates condensés ;
- et leurs mélanges,
en prédispersant la charge avec l'assistance d'un agent stabilisant introduit dans ladite phase organique liquide, ledit agent stabilisant répondant à la formule : 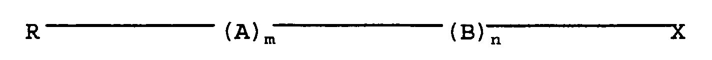 comprenant au moins une fonction acide libre, dans laquelle X est un radical carboxylique, phosphinique, phosphonique, phosphorique, sulfonique ou sulfurique, (A) est l'oxyde d'éthylène, (B) est l'oxyde de propylène, avec 0 ≤ (m + n) ≤ 24, R est choisi dans le groupe formé par les radicaux alkyles, les aryles, les alkyl-aryles, les hétérocycles saturés ou non, contenant 5 à 28 atomes de carbone et le radical stéroïde ;
b) on introduit la suspension homogène et stable de ladite charge préparée précédemment dans le milieu réactionnel avant, pendant ou après l'introduction de l'un au moins des constituants du composé thermodurcissable souhaité.

2. Procédé selon la revendication 1, caractérisé en ce que ladite phase organique liquide est choisie dans le groupe constitué par :
- le dioctylphtalate, le dibutylphtalate, le dinonylphtalate, le didécylphtalate, le diheptylphtalate, le diisodécylphtalate, le diisoundécylphtalate, les phtalates mixtes d'octyle, de butyle et de décyle, le benzylphtalate, le cyclohéxylphtalate, le méthoxyéthylphtalate, le méthoxybutylphtalate, le butoxyéthylphtalate et autres substituants à base de glycols ;
- le trioctylphosphate, le tricrézylphosphate, l'octyldicrézylphosphate ou autres phosphates d'alkylaryle ;
- les polyadipates d'éthylène glycol ou de propylène glycol, les polysébaçates d'éthylène glycol ou de propylène glycol ;
- et leurs mélanges.

3. Procédé selon la revendication 1 ou la revendication 2, caractérisé en ce que le radical R de l'agent stabilisant choisi dans le groupe formé par les radicaux alkyls, aryls, alkyls-aryls, les hétérocycles saturés ou non, contient de préférence de 8 à 24 atomes de carbone.

4. Procédé selon l'une quelconque des revendications 1 à 3, caractérisé en ce que, quand le radical X de l'agent stabilisant comporte plusieurs fonctions acides, l'une d'entre elles au moins est libre, les autres étant salifiées ou estérifiées par un alcool de formule R'-OH dans laquelle R' est choisi dans le groupe constitué par une chaîne carbonée contenant de 1 à 4 atomes de carbone et l'un des radicaux appartenant au groupe défini pour R.

5. Procédé selon l'une quelconque des revendications 1 à 4, caractérisé en ce que le radical R de l'agent stabilisant comporte au moins un groupement fonctionnel du type halogène, -OH, -COOH, -COOR, -NO₂, -NH₂, -CONH₂, CN, phosphinique, phosphonique, phosphorique, sulfonique, sulfurique.

6. Procédé selon la revendication 4, caractérisé en ce que le radical R' est identique au radical R.

7. Procédé selon l'une quelconque des revendications 1 à 6, caractérisé en ce qu'on introduit dans le milieu réactionnel l'un au moins des adjuvants appartenant au groupe constitué par les catalyseurs de réaction, les tensioactifs, les stabilisants thermiques ou photochimiques, les lubrifiants, les plastifiants autres que ceux intervenant dans la préparation de la suspension de la charge, les antistatiques, les ignifugeants, les agents passivants des métaux, les agents porofores.

8. Procédé selon l'une quelconque des revendications 1 à 7, caractérisé en ce que la charge pulvérulente à prédisperser au sein de la phase organique liquide est choisie parmi les matières pulvérulentes d'origine minérale et/ou synthétique, en particulier parmi le carbonate de calcium, le carbonate de zinc, la dolomie, la chaux, la magnésie, le trihydroxyde d'aluminium, la silice, les argiles, le kaolin, le talc, le mica, les oxydes de zinc, de fer, d'antimoine, de titane, les fibres et billes de verre, la wollastonite, le phosphore rouge, les pigments divers, pris seuls ou en mélange.

9. Procédé selon l'une quelconque des revendications 1 à 8, caractérisé en ce que la charge pulvérulente à prédisperser au sein de la phase organique liquide est choisie parmi les matières pulvérulentes organiques d'origine naturelle et/ou synthétique, en particulier les colorants, le noir de carbone, l'amidon, les fibres et farine de cellulose, les fibres de carbone, les poudres de mélamine, prises seules ou en mélange.

10. Procédé selon la revendication 8 ou la revendication 9, caractérisé en ce que la charge pulvérulente est une combinaison de matières pulvérulentes d'origine minérale naturelle ou synthétique.

11. Procédé selon l'une quelconque des revendications 1 à 10, caractérisé en ce que les matières pulvérulentes constituant la charge ont une dimension comprise entre 0,01 et 300 µm, et préférentiellement entre 0,1 et 100 µm.

12. Procédé selon l'une quelconque des revendications 1 à 11, caractérisé en ce que la suspension homogène et stable de la charge se compose principalement par rapport à la masse totale de :
a) 20 % à 80 % en poids et préférentiellement de 40 % à 70 % en poids de la charge ;
b) 79,9 % à 18,4 % en poids et préférentiellement de 59,5 % à 28,9 % en poids de la phase organique liquide ;
c) 0,1 % à 1,6 % en poids et préférentiellement de 0,5 % à 1,1 % en poids de l'agent stabilisant.

13. Procédé selon l'une quelconque des revendications 1 à 12, caractérisé en ce que du polyol pouvant intervenir dans la réalisation du composé thermodurcissable souhaité est introduit dans la suspension homogène et stable de la charge.

14. Procédé selon l'une quelconque des revendications 1 à 13, caractérisé en ce que la viscosité Brookfield de la suspension homogène et stable de la charge est comprise entre 500 et 2 000 mPa.s et préférentiellement entre 600 et 1600 mPa.s, mesurée à température ambiante.

15. Procédé selon l'une quelconque des revendications 1 à 14, caractérisé en ce que la suspension homogène et stable de la charge est introduite dans le milieu réactionnel sous la forme d'un pré-mélange avec le polyol puis est mis en oeuvre sous cette forme avec les autres constituants du polyuréthane souhaité, tous les constituants étant mis en oeuvre selon des quantités et proportions définies à la demande.

16. Procédé selon l'une quelconque des revendications 1 à 14, caractérisé en ce que la suspension homogène et stable de la charge est introduite simultanément avec les divers constituants du polyuréthane souhaité, tous les constituants étant mis en oeuvre selon des quantités et proportions définies à la demande.

17. Procédé selon l'une quelconque des revendications 1 à 14, caractérisé en ce que la suspension homogène et stable de la charge est introduite dans le milieu réactionnel après que soit réalisé le pré-mélange de tous les constituants du polyuréthane souhaité, tous les constituants étant mis en oeuvre selon des quantités et proportions définies à la demande.

18. Procédé selon l'une quelconque des revendications 1 à 17, caractérisé en ce que la suspension homogène et stable de la charge est introduite dans la composition du composé polyuréthane souhaité à raison de 1 % à 100 % en poids et préférentiellement à raison de 10 % à 50 % en poids par rapport au polyol mis en oeuvre.

19. Procédé selon l'une quelconque des revendications 1 à 18, caractérisé en ce qu'il est mis en oeuvre sur les technologies connues pour la fabrication des composés thermodurcissables du type polyuréthane.

20. Suspension homogène et stable d'une charge dans une phase organique liquide, ladite suspension étant destinée à la préparation de composés thermodurcissables chargés du type polyuréthane, et ladite phase organique liquide étant compatible avec l'un au moins des constituants du composé thermodurcissable souhaité et le restant durant la réaction de formation dudit composé thermodurcissable, caractérisée en ce que ladite phase organique est choisie dans le groupe constitué par :
- les dialcoyles phtalates symétriques ou asymétriques, aliphatiques, aromatiques, cycliques, ramifiés ou non, ou dérivés de glycols ;
- les esters de poly- ou mono acides organiques ou inorganiques du type adipate d'alcoyle, sébaçate d'alcoyle, les diesters d'alcools en C₁ à C₈ de mono-, di- ou triéthylèneglycol et de glycérol du type trimellitate, azélate, abiétate, citrate, mellitate, stéarate, oléate, palmitate, ricinoléate, myristate, benzoate, pélargonate ;
- les phosphates mono- ou polyalcoyles, d'aryle et de dérivés des glycols ;
- les phosphates d'alkyl-aryle ;
- les polyesters ;
- les halophosphates condensés ;
- et leurs mélanges
et en ce que ladite charge est dispersée avec l'assistance d'un agent stabilisant introduit dans ladite phase organique liquide et répondant à la formule : 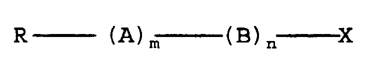 comprenant au moins une fonction acide libre, dans laquelle X est un radical carboxylique, phosphinique, phosphonique, phosphorique, sulfonique ou sulfurique, (A) est l'oxyde d'éthylène, (B) est l'oxyde de propylène, avec 0 ≤ (m + n) ≤ 24, R est choisi dans le groupe formé par les radicaux alkyls, les aryls, les alkyls-aryls, les hétérocycles saturés ou non, contenant 5 à 28 atomes de carbone et le radical stéroïde.

## Patentansprüche

1. Verfahren zur Herstellung von füllstoffhaltigen, wärmehärtbaren Verbindungen vom Polyurethantyp durch Kondensation der Bestandteile der gewünschten Verbindungen in Gegenwart eines pulverförmigen Füllstoffs,
gekennzeichnet durch folgende Schritte:
a) Herstellen einer homogenen und stabilen Suspension des Füllstoffs in einer mit der gewünschten wärmehärtbaren Verbindung verträglichen flüssigen organischen Phase, die ausgewählt wird unter:
- symmetrischen und asymmetrischen aliphatischen, aromatischen, cyclischen, verzweigten oder unverzweigten Dialkylphthalaten und Glykolderivaten,
- Estern von organischen oder anorganischen ein- oder mehrwertigen Säuren vom Typ der Alkyladipate und Alkylsebacate und den Diestern von C₁₋₈-Mono-, Di-oder Triethylenglykol und von Glycerin vom Typ der Trimellitate, Azelate, Abietate, Citrate, Mellitate, Stearate, Oleate, Palmitate, Ricinoleate, Myristate, Benzoate und Pelargonate,
- Mono- und Polyalkylphosphaten, Arylphosphaten und Phosphaten von Glykolderivaten,
- Alkylarylphosphaten,
- Polyestern,
- kondensierten Halogenphosphaten,
- und deren Gemischen,
durch Vordispergieren des Füllstoffs mit Hilfe eines Stabilisierungsmittels, das zu der flüssigen organischen Phase gegeben wird, wobei das Stabilisierungsmittel des Füllstoffs die folgende Formel besitzt: 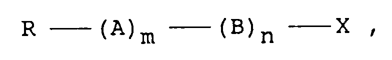 die mindestens eine freie Säuregruppe aufweist und worin bedeuten:
X einen Carboxy-, Phosphinsäure-, Phosphonsäure-, Phosphorsäure-, Sulfonsäure- oder Schwefelsäurerest,
A Ethylenoxid,
B Propylenoxid,
wobei 0 ≤ (m + n) ≤ 24 ist,
und
R einen Rest, der unter Alkylgruppen, Arylgruppen und Alkylarylgruppen, gesättigten und ungesättigten Heterocyclen mit 5 bis 28 Kohlenstoffatomen und vorzugsweise 8 bis 24 Kohlenstoffatomen und der Steroidgruppe ausgewählt ist,
b) Einbringen der zuvor hergestellten homogenen und stabilen Suspension des Füllstoffs in das Reaktionsmedium vor, während oder nach der Zugabe mindestens eines der Bestandteile der gewünschten wärmehärtbaren Verbindung.

2. Verfahren nach Anspruch 1, dadurch gekennzeichnet, daß die flüssige organische Phase ausgewählt wird unter:
- Dioctylphthalat, Dibutylphthalat, Dinonylphthalat, Didecylphthalat, Diheptylphthalat, Diisodecylphthalat, Diisoundecylphthalat, gemischten Octyl-, Butyl- und Decylphthalaten, Benzylphthalat, Cyclohexylphthalat, Methoxyethylphthalat, Methoxybutylphthalat, Butoxyethylphthalat und anderen Substituenten auf der Basis von Glykolen,
- Trioctylphosphat, Tricresylphosphat, Octyldicresylphosphat und anderen Alkylarylphosphaten,
- Ethylenglykolpolyadipaten, Propylenglykolpolyadipaten, Ethylenglykolpolysebacaten und Propylenglykolpolysebacaten
- und deren Gemischen.

3. Verfahren nach Anspruch 1 oder 2, dadurch gekennzeichnet, daß der Rest R des Stabilisierungsmittels unter Alkylgruppen, Arylgruppen, Alkylarylgruppen und gesättigten oder ungesättigten Heterocyclen, die vorzugsweise 8 bis 24 Kohlenstoffatome enthalten, ausgewählt wird.

4. Verfahren nach einem der Ansprüche 1 bis 3, dadurch gekennzeichnet, daß, wenn der Rest X des Stabilisierungsmittels mehrere Säurefunktionen aufweist, mindestens eine von diesen frei ist, wobei die anderen als Salz oder mit einem Alkohol der Formel R'-OH verestert vorliegen, worin R' unter Kohlenwasserstoffketten mit 1 bis 4 Kohlenstoffatomen und den für R definierten Resten ausgewählt ist.

5. Verfahren nach einem der Ansprüche 1 bis 4, dadurch gekennzeichnet, daß der Rest R des Stabilisierungsmittels mindestens eine der folgenden funktionellen Gruppen aufweist: ein Halogen, einen Rest -OH, -COOH, -COOR,-NO₂, -NH₂, -CONH₂, CN, einen Phosphinsäure-, Phosphonsäure-, Phosphorsäure-, Sulfonsäure- oder Schwefelsäurerest.

6. Verfahren nach Anspruch 4, dadurch gekennzeichnet, daß der Rest R' mit dem Rest R identisch ist.

7. Verfahren nach einem der Ansprüche 1 bis 6, dadurch gekennzeichnet, daß dem Reaktionsmedium mindestens ein Hilfsstoff zugegeben wird, der ausgewählt wird unter Reaktionskatalysatoren, grenzflächenaktiven Stoffen, thermischen und photochemischen Stabilisatoren, Schmiermitteln, Weichmachern, die nicht bei der Herstellung der Suspension des Füllstoffs eingesetzt werden, antistatischen Mitteln, Flammschutzmitteln, Metallpassivierungsmitteln und Treibmitteln.

8. Verfahren nach einem der Ansprüche 1 bis 7, dadurch gekennzeichnet, daß der in der flüssigen organischen Phase vorzudispergierende pulverförmige Füllstoff ausgewählt wird unter mineralischen/anorganischen und/oder synthetischen pulverförmigen Stoffen, insbesondere unter Calciumcarbonat, Zinkcarbonat, Dolomit, Kalk, Magnesiumoxid, Aluminiumtrihydroxid, Kieselsäure, Tonen, Kaolin, Talk, Glimmer, Zinkoxid, Eisenoxid, Antimonoxid, Titanoxid, Glasfasern und Glaskügelchen, Wollastonit, rotem Phosphor, verschiedenen Pigmenten, die allein oder im Gemisch verwendet werden können.

9. Verfahren nach einem der Ansprüche 1 bis 8, dadurch gekennzeichnet, daß der in der organischen Phase vorzudispergierende pulverförmige Füllstoff ausgewählt wird unter organischen pulverförmigen Stoffen natürlichen und/oder synthetischen Ursprungs, insbesondere Farbmitteln, Ruß, Stärke, Cellulosefasern und Cellulosemehl, Kohlenstoffasern und Melaminpulvern, die allein oder im Gemisch verwendet werden können.

10. Verfahren nach Anspruch 8 oder 9, dadurch gekennzeichnet, daß der pulverförmige Füllstoff eine Kombination pulverförmiger mineralischer bzw. anorganischer Stoffe natürlichen oder synthetischen Ursprungs ist.

11. Verfahren nach einem der Ansprüche 1 bis 10, dadurch gekennzeichnet, daß die den Füllstoff bildenden pulverförmigen Stoffe eine Teilchengröße im Bereich von 0,01 bis 300 µm, vorzugsweise 0,1 bis 100 µm, aufweisen.

12. Verfahren nach einem der Ansprüche 1 bis 11, dadurch gekennzeichnet, daß die homogene und stabile Suspension des Füllstoffs, bezogen auf die Gesamtmasse, im wesentlichen folgendermaßen zusammengesetzt ist:
a) 20 bis 80 Gew.-% und vorzugsweise 40 bis 70 Gew.-% Füllstoff,
b) 79,9 bis 18,4 Gew.-% und vorzugsweise 59,5 bis 28,9 Gew.-% flüssige organische Phase,
c) 0,1 bis 1,6 Gew.-% und vorzugsweise 0,5 bis 1,1 Gew.-% Stabilisierungsmittel.

13. Verfahren nach einem der Ansprüche 1 bis 12, dadurch gekennzeichnet, daß ein Polyol, der bei der Herstellung der gewünschten wärmehärtbaren Verbindung eingesetzt werden kann, in die homogene und stabile Suspension des Füllstoffs eingebracht wird.

14. Verfahren nach einem der Ansprüche 1 bis 13, dadurch gekennzeichnet, daß die Brookfield-Viskosität der homogenen und stabilen Suspension des Füllstoffs 500 bis 2000 mPa·s und vorzugsweise 600 bis 1600 mPa·s, gemessen bei Umgebungstemperatur, beträgt.

15. Verfahren nach einem der Ansprüche 1 bis 14, dadurch gekennzeichnet, daß die homogene und stabile Suspension des Füllstoffs in Form eines Vorgemisches mit dem Polyol in das Reaktionsmedium eingebracht und anschließend in dieser Form mit den anderen Bestandteilen des gewünschten Polyurethans verarbeitet wird, wobei alle Bestandteile in den erforderlichen Mengen und Anteilen eingesetzt werden.

16. Verfahren nach einem der Ansprüche 1 bis 14, dadurch gekennzeichnet, daß die homogene und stabile Suspension des Füllstoffs gleichzeitig mit den verschiedenen Bestandteilen des gewünschten Polyurethans zugegeben wird, wobei alle Bestandteile in den erforderlichen Mengen und Anteilen eingesetzt werden.

17. Verfahren nach einem der Ansprüche 1 bis 14, dadurch gekennzeichnet, daß die homogene und stabile Suspension des Füllstoffs dem Reaktionsmedium zugegeben wird, nachdem das Vorgemisch aller Bestandteile des gewünschten Polyurethans hergestellt worden ist, wobei alle Bestandteile in den erforderlichen Mengen und Anteilen eingesetzt werden.

18. Verfahren nach einem der Ansprüche 1 bis 17, dadurch gekennzeichnet, daß die homogene und stabile Suspension des Füllstoffs zu der Zusammensetzung der gewünschten Polyurethanverbindung in einer Menge von 1 bis 100 Gew.-% und vorzugsweise 10 bis 50 Gew.-%, bezogen auf das eingesetzte Polyol, gegeben wird.

19. Verfahren nach einem der Ansprüche 1 bis 18, dadurch gekennzeichnet, daß es auf die für die Herstellung von wärmehärtbaren Verbindungen vom Polyurethantyp bekannten Techniken angewandt wird.

20. Homogene und stabile Suspension eines Füllstoffs in einer flüssigen organischen Phase, wobei die Suspension für die Herstellung von füllstoffhaltigen, wärmehärtbaren Verbindungen vom Polyurethantyp bestimmt ist und die flüssige organische Phase mit mindestens einem der Bestandteile der gewünschten wärmehärtbaren Verbindung verträglich ist und mit dieser Verbindung während der Bildungsreaktion der wärmehärtbaren Verbindung verträglich bleibt,
dadurch gekennzeichnet, daß
die organische Phase ausgewählt wird unter:
- symmetrischen und asymmetrischen aliphatischen, aromatischen, cyclischen, verzweigten oder unverzweigten Dialkylphthalaten und Glykolderivaten,
- Estern von organischen oder anorganischen ein- oder mehrwertigen Säuren vom Typ der Alkyladipate und Alkylsebacate und den Diestern von C₁₋₈-Mono-, Di- oder Triethylenglykol und von Glycerin vom Typ der Trimellitate, Azelate, Abietate, Citrate, Mellitate, Stearate, Oleate, Palmitate, Ricinoleate, Myristate, Benzoate und Pelargonate,
- Mono- und Polyalkylphosphaten, Arylphosphaten und Phosphaten von Glykolderivaten,
- Alkylarylphosphaten,
- Polyestern,
- kondensierten Halogenphosphaten,
- und deren Gemischen,
und daß der Füllstoff mit Hilfe eines Stabilisierungsmittels dispergiert wird, das zu der flüssigen organischen Phase gegeben wird und der die folgende Formel besitzt: 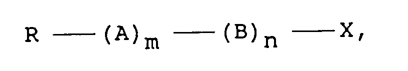 die mindestens eine freie Säuregruppe aufweist und worin bedeuten:
X einen Carboxy-, Phosphinsäure-, Phosphonsäure-, Phosphorsäure-, Sulfonsäure- oder Schwefelsäurerest,
A Ethylenoxid,
B Propylenoxid,
wobei 0 ≤ (m + n) ≤ 24 ist,
und
R einen Rest, der unter Alkylgruppen, Arylgruppen und Alkylarylgruppen, gesättigten und ungesättigten Heterocyclen mit 5 bis 28 Kohlenstoffatomen und der Steroidgruppe ausgewählt ist.

## Claims

1. Process for the preparation of charged thermosetting compounds of polyurethane type by condensation reaction of the constituents of the desired compound in the presence of a pulverulent charge, characterised in that
a) a homogenous and stable suspension of said charge is prepared in liquid organic phase compatible with the desired thermosetting compound, selected from the group comprising
- dialkyl phthalates that are symmetrical or asymmetrical, aliphatic, aromatic, cyclic, branched or non-branched, or derivatives of glycols
- organic or inorganic poly- or mono-acid esters of the alkyl adipate alkyl sebacate type, C₁ to C₈ alcohol diesters of mono-, di- or tri-ethylene glycol and of glycerol of the trimellitate, azelate, abietate, citrate, mellitate, stearate, oleate, palmitate, ricinoleate, myristate, benzoate, perlargonate type;
- mono- or polyalkyl phosphates, aryl phosphates and phosphates of derivatives of glycols;
- alkyl-aryl phosphates;
- polyesters;
- condensed halophosphates;
- and mixtures thereof,
by predispersing the charge with the assistance of a stabilising agent added into the said liquid organic phase, the said stabilising agent corresponding to the formula: 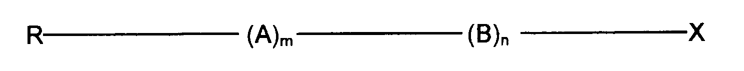 comprising at least one free acid function in which X is a carboxylic, phosphinic, phosphonic, phosphoric, sulphonic or sulphuric radical, (A) is ethylene oxide, (B) is propylene oxide, with 0 ≤ (m+ n) ≤ 24, R is selected from a group comprising alkyl radicals, aryls, alkyl-aryls, saturated or non-saturated heterocycles, comprising 5 to 28 carbon atoms and the steroid radical;
b) the homogenous and stable suspension of the said previously prepared charge is added to the reaction medium before, during or after the addition of at least one constituent of the desired thermosetting compound.

2. Process according to claim 1, characterised in that the said liquid organic phase is selected from the group comprising:
- dioctylphthalate, dibutylphthalate, dinonylphthalate, didecylphthalate, diheptylphthalate, diisodecylphthalate, diisoundecylphthalate, mixed phthalates of octyl, butyl and decyl, benzylphthalate, cyclohexylphthalate, methoxyethylphthalate, methoxybutylphthalate, butoxyethylphthalate, and other glycol-based substituents;
- trioctylphosphate, tricrezylphosphate, octyldicrezylphosphate or other alkyl-aryl phosphates;
- ethylene glycol or propylene glycol polyadipates, ethylene glycol or propylene glycol polysebacates;
- and mixtures thereof.

3. Process according to claim 1 or claim 2, characterised in that the radical R of the stabilising agent selected from a group comprising alkyl, aryl, alkyl-aryl radicals, saturated or non-saturated heterocycles, preferably contains 8 to 24 carbon atoms.

4. Process according to any one of claims 1 to 3, characterised in that when the radical X of the stabilising agent comprises several acid functions, at least one of them is free, the others being salified or esterified by an alcohol of the formula R'-OH in which R' is selected from a group comprising a carbon chain with 1 to 4 carbon atoms and one of the radicals in the group defined for R.

5. Process according to any one of claims 1 to 4, characterised in that the radical R of the stabilising agent comprises at least functional group of the halogen -OH, -COOH, -COOR, -NO₂, -NH₂, -CONH₂, CN, phosphinic, phosphonic, phosphoric, sulphonic, sulphuric type.

6. Process according to claim 4, characterised in that the radical R' is identical to the radical R.

7. Process according to any one of claims 1 to 6, characterised in that at least one of the adjuvants is added to the reaction medium of the group comprising , reaction catalysts, surfactants, thermal or photochemical stabilisers, lubricants, plasticisers other than those intervening in the preparation of the charge suspension, antistatics, flame retardants, metal passivating agents, pore-forming agents.

8. Process according to any one of claims 1 to 7, characterised in that the pulverulent charge to be predispersed within the liquid organic phase is selected from pulverulent materials of mineral andlor synthetic origin, in particular from calcium carbonate, zinc carbonate, dolomite, lime, magnesia, aluminium trihydroxide, silica, clays, kaolin, talc, mica, zinc oxides, iron oxides, antimony oxide, titanium oxide, glass fibres and balls, wollastonite, red phosphorus, various pigments, taken alone or in mixture.

9. Process according to any one of claims 1 to 8, characterised in that pulverulent charge to be predispersed within the liquid organic phase is selected from organic pulverulent materials of natural or synthetic origin, in particular dyes, carbon black, starch, cellulose fibres and meal, carbon fibres, melamine powders, taken alone or in mixture.

10. Process according to claim 8 or claim 9, characterised in that the pulverulent charge is a combination of pulverulent materials of natural or synthetic mineral origin.

11. Process according to any one of claims 1 to 10, characterised in that the pulverulent materials constituting the charge have a size comprised between 0.01 and 300 µm, preferably between 0.1 and 100 µm.

12. Process according to any one of claims 1 to 11, characterised in that the homogenous and stable suspension of the charge is principally composed, relative to the total mass, of:
a) 20 % to 80 % by weight and preferably 40 % to 70 % by weight of the charge,
b) 79.9 % to 18.4 % by weight and preferably 59.5 % to 28.9 % by weight of the liquid organic phase;
c) 0.1 % to 1.6 % by weight and preferably 0.5 % to 1.1 % by weight of the stabilising agent.

13. Process according to any one of claims 1 to 12, characterised in that polyol which can take part in the production of the desired thermosetting compound is added to the homogenous and stable suspension of the charge.

14. Process according to any one of claims 1 to 13, characterised in that Brookfield viscosity of the homogenous and stable solution of the charge is comprised between 500 and 2000 mPas, and preferably between 600 and 1600 mPas, measured at ambient temperature.

15. Process according to any one of claims 1 to 14, characterised in that the homogenous and stable suspension of the charge is added into the reaction medium in the form of a premix with the polyol and then used in this form with the other constituents of the desired polyurethane, all the constituents being used in keeping with the quantities and proportions defined, as requested.

16. Process according to any one of claims 1 to 14, characterised in that the homogenous and stable suspension of the charge is added simultaneously with the various constituents of the desired polyurethane, all the constituents being used in keeping with the quantities and proportions defined, as requested.

17. Process according to any one of claims 1 to 14, characterised in that the homogenous and stable suspension of the charge is introduced into the reaction medium after the premixing of all the constituents of the desired polyurethane, all the constituents being used in keeping with the quantities and proportions defined, as requested.

18. Process according to any one of the claims 1 to 17, characterised in that the homogenous and stable suspension of the charge is added to the composition of the desired polyurethane compound in a proportion of 1 % to 100 % by weight, and preferably in a proportion of 10 % to 50 % by weight, relative to the polyol used.

19. Process according to any one of claims 1 to 18, characterised in that it is implemented according to known techniques for the manufacture of thermosetting compounds of the polyurethane type.

20. Homogenous and stable suspension of a charge in a liquid organic phase, the said solution being intended for the preparation of charged thermosetting compounds of the polyurethane type and the said liquid organic phase being compatible with at least one of the constituents of the desired thermosetting compound and remaining compatible during the formation reaction of the said thermosetting compound, characterised in that the said liquid organic phase is selected from the group comprising:
- dialkyl phthalates that are symmetrical or asymmetrical, aliphatic, aromatic, cyclic, branched or non-branched, or derivatives of glycols
- organic or inorganic poly- or mono-acid esters of the alkyl adipate alkyl sebacate type, C₁ to C₈ alcohol diesters of mono-, di- or tri-ethylene glycol and of glycerol of the trimellitate, azelate, abietate, citrate, mellitate, stearate, oleate, palmitate, ricinoleate, myristate, benzoate, perlargonate type;
- mono- or polyalkyl phosphates, aryl phosphates and phosphates of derivatives of glycols;
- alkyl-aryl phosphates;
- polyesters;
- condensed halophosphates;
- and mixtures thereof,
and in that the said charge is dispersed with the assistance of a stabilising agent added into the said liquid organic phase, the said stabilising agent corresponding to the formula: 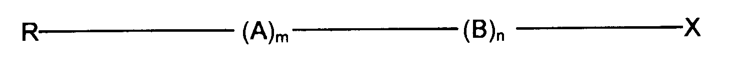 comprising at least one free acid function in which X is a carboxylic, phosphinic, phosphonic, phosphoric, sulphonic or sulphuric radical, (A) is ethylene oxide, (B) is propylene oxide, with 0 ≤ (m+ n) ≤ 24, R is selected from a group comprising alkyl radicals, aryls, alkyl-aryls, saturated or non-saturated heterocycles, comprising 5 to 28 carbon atoms and the steroid radical.
